Europäisches Patentamt

European Patent Office

Office européen des brevets

(11) Veröffentlichungsnummer: **0 297 575**
A2

## (12) EUROPÄISCHE PATENTANMELDUNG

(21) Anmeldenummer: 88110470.7

(22) Anmeldetag: 30.06.88

(51) Int. Cl.⁴: **B60L 5/38**

(30) Priorität: 01.07.87 DE 8709215 U

(43) Veröffentlichungstag der Anmeldung:
04.01.89 Patentblatt 89/01

(84) Benannte Vertragsstaaten:
BE DE FR GB NL

(71) Anmelder: KRUEGER APPARATEBAU GMBH &
CO. KG
Lornsenstrasse 124-136 Postfach 57 11 01
D-2000 Schenefeld(DE)

(72) Erfinder: Van Riesen, Klaus
Brahmsstrasse 1
D-2200 Elmshorn(DE)

(74) Vertreter: Patentanwälte Wenzel & Kalkoff
Grubes Allee 26 Postfach 730466
D-2000 Hamburg 73(DE)

(54) **Stromabnehmer für dritte Schiene.**

(57) Ein von einer Schwingenanordnung getragener Stromabnehmer für dritte Schiene für Strom-getrie-bene Fahrzeuge ist mittels eines kraftbetätigten Hubelements, umfassend einen Zylinder (42), einen Kolben (430) und eine von diesem betätigte Kolben-stange (431), die mittels einer Verriegelungsanord-nung (45) zum Verriegeln des Stromabnehmers in einer Position dient, an die dritte Schiene anlegbar bzw. von dieser abzulegen. Um eine solche Anord-nung möglichst einfach, kleinbauend und störunan-fällig auszubilden und eine Verriegelung im Fernbe-trieb zu ermöglichen, umfaßt die Verriegelungsa-nordnung eine federbeaufschlagte Riegelhülse (451), die über an ihr angeordnete Steuerflächen Klinkene-lemente (452) zum Eingriff an der Kolbenstange (431) bringt oder aus dieser Position freigibt.

FIG 2

## Stromabnehmer für dritte Schiene

Die Erfindung betrifft einen Stromabnehmer für dritte Schiene mit über eine Schwingenanordnung kraftbetätigt an die dritte Schiene anlegbaren Schleifstücken, wobei die Schwingenanordnung als Isolator gegenüber dem Fahrstrom ausgebildet und in ihrer angelegten Arbeitsstel-lung gegen Federkraft schwingend sowie in mindestens einer ihrer Endstellungen verriegelbar ist, mit einem kraftbetätigten Hubelement, das sich über mindestens ein Federelement gelenkig an der Schwinge abstützt und einen Zylinder mit einem Zylindergehäuse sowie einem kraftbeaufschlagbaren Kolben umfaßt, der in wenigstens einer Position verriegelbar ist und eine Ausgleichsanordnung zur Längenanpassung des Hubelements trägt, die eine von einer Kolbenstange getragene und an ihr geführte Hülse umfaßt, die gegenüber dem Zylindergehäuse durch eine Druckfeder abgestützt ist, wobei die Kolbenstange mit der Hülse verschiebbar in Wirkverbindung steht und gegenüber dem Zylindergehäuse in mindestes einer Position verriegelbar ist.

Die Ausbildung von Schwingen als Isolatoren ist ebenso Stand der Technik (DE-PS 1 513 621) wie die Verriegelung der Schwingenanordnung in einer oder beiden Endstellungen (s. DE-AS 1 226 137). Die Vereinigung beider Maßnahmen in einem Stromabnehmer ist in der Praxis mehrfach verwirklicht worden (U-Bahnen Berlin, München et al.). Außerdem ist ein kraftbetätigtes Hubelement für Stromabnehmer mit den eingangs beschriebenen Merkmalen bekannt (DE-PS 871 618), bei dem die Verriegelung über ein mehrteiliges System erfolgt, das eine tellerartige Scheibe in Form einer Teilkupplung, die über eine Feder in einer Hülse über die Kolbenstange kraft- bzw. federbeaufschlagt wird, umfaßt. Die Verriegelung erfolgt dabei über von der Keilkupplung freigegebene Segmente, die durch Federn bei ausgefahrenem Kolben in eine in der Zylindergehäusewand angeordnete Ringnut eingreifen. Dieser bekannte Klinkenmechanismus funktioniert nur bei Handbetrieb, d.h. bei von Hand in Arbeitsposition herausgezogener Kolbenstange. Fährt man hingegen die Kolbenstange mit Hilfe von Druckluft im normalen Betrieb aus, so wird der gesamte Kolben immer in Verbindung mit den von der Keilkupplung eingezogenen Segmenten bleiben, so daß diese nie in die Ringnut eindringen können. Wird die Druckluftzufuhr unterbunden, so bewegt sich der Kolben unter der Kraft der Rückholfeder zusammen mit dem Klinkenmechanismus in sei ne Ruhestellung zurück. Die Kolbenstange greift über eine formschlüssige, die Bewegungsrichtung umlenkende Rollenhebelanordnung an der Schwenkachse für die Schwingenarme an. Für die Verklinkung ist an der Schwenkachse ein Vierkant angebracht, auf den ein Schlüssel für die manuelle Betätigung aufgesteckt werden kann. Abgesehen davon, daß diese Einrichtung nur im manuellen Notbetrieb verriegelt werden kann, ist die Konstruktion außerordentlich aufwendig und schwerfällig, da für die Verriegelung große Massen infolge der nach außen wirksamen Klinken und der tellerförmigen Kupplungseinrichtung beherrscht werden müssen, die bekanntlich bei bewegten Systemen zu starken Schwingungen und daraus resultierendem Verschleiß führen. Außerdem sind solche Systeme, die mit Dauerdruckluft arbeiten und folglich ein großes Volumen haben, sehr störanfällig, indem sie bei tiefen Temperaturen zu Vereisungen neigen und Dichtungsprobleme aufwerfen, die durch häufige Leckagen zu einem willkürlich und oft vorkommenden, nicht kontrollierbaren Ablegen der Stromabnehmer führen.

Der Erfindung liegt demgegenüber die Aufgabe zugrunde, einen Stromabnehmer der eingangs beschriebenen Art zu schaffen, der bei kleiner winterfester Bauweise eine Verriegelung im Fernbetrieb ermöglicht.

Diese Aufgabe wird erfindungsgemäß dadurch gelöst, daß zur Verriegelung eine federbeaufschlagte Riegelhülse mit konisch auf an der Kol-benstange angreifende Klinkenelemente einwirken-den Steuerflächen vorgesehen ist, wobei die Ver-riegelungsposition selbsthaltend und durch Druck-fluid mittels Impuls lösbar ist. Damit erhält man einen Stromabnehmer, der aufgrund der nach innen wirksamen Ringelemente äußerst schmal und kompakt baut, wobei alle Bauteile in einer Ebene angeordnet sind. Solche kleinbauenden Funktionsteile von Stromabnehmern dienen einerseits der Erfüllung der im modernen Fahrzeugbau gestellten generellen Anforderung, die Ein- und Anbauräume im Bereich zwischen Drehgestell und äußerer Fahrzeugumgrenzung zu minimieren. Darüber hinaus werden durch die kleineren Massen Schwingungsprobleme vermieden bzw. in tolerierbarem Rahmen gehalten. Durch die konisch an der Kolbenstange angreifenden Klinkenelemente wird eine spielfreie, selbstzentrierende Verriegelung geschaffen, die einen einwandfreien Kraftausgleich gewährleistet, ohne daß Verschiebungen in radialer Richtung auftreten können. Weiterhin wird durch die erfindungs-gemäße Anordnung eine fernbetätigte Impulsbeauf-schlagung des Hubelements einerseits und der Verriegelung andererseits sichergestellt, so daß keinerlei Dauerbeaufschlagung mit Druckluft mit den weiter oben erwähnten Nachteilen erforderlich ist. Damit ist eine hohe Winterfestigkeit des erfindungsgemäßen Stromabnehmers erreichbar.

In besonders bevorzugter Weiterbildung der Erfindung kann das Hubelement an seinen beiden Enden mit Lagerpunkten zur beidseitig - schwenkbaren Lagerung am Stromabnehmer-Grundkörper sowie an einem Lenker der Schwingenanordnung ausgebildet sein. Diese Ausbildung wird durch die kleinbauende Struktur des Hubelements gemäß der Erfindung überhaupt erst möglich, und es werden dadurch umständliche Umlenkungen, wie sie z.B. bei der Anordnung gemäß DE-PS 871 618 erforderlich sind, überflüssig.

In weiterer Ausbildung dieser Konstruktion kann die Schwingenanordnung in an sich bekannter Weise als gelenkig am Schleifstück angreifendes, in der Fahrebene parallelogrammartig angeordnetes Lenkerpaar ausgebildet sein, wobei sich an mindestens einem der Lenker dieses Lenkerpaares ein Hubelement gelenkig abstützt und gegenüber dem Stromabnehmer-Grundkörper in der Parallelogrammebene schwenkbar gelagert ist. Mit einer solchen Ausführungsform wird es möglich, verschleißfestere Versionen gerade auch für kraftbetätigte und verriegelbare Stromabnehmer zu - schaffen, die eine verbesserte Anlage gegenüber der Stromschiene gewährleisten. Es ist zwar für sich bekannt, bei Stromabnehmern für dritte Schiene die Schwingenanordnung parallelogrammartig auszugestalten (DE-GM 74 19 024), jedoch ist jene Anordnung weder druckluftbetätigt noch fernbedienbar, geschweige denn verriegelbar, so daß sie sich nicht für Hochgeschwindigkeitszüge moderner Bauart eignet. Demgegenüber wird es durch die Parallelogramm-Schwingenanordnung speziell für mittels kraftbetätigten Hubelementen fernbedient arbeitende Stromabnehmer möglich, daß das an zwei Gelenkpunkten aufgehängte Schleifstück selbst bei größeren Schienenstößen, die in der Praxis insbesondere bei zum Teil sehr alten Strecken zunehmend auftreten, immer parallel und flächig gegen die Stromschiene anliegt. Durch die Parallelogramm-Anordnung erhält das Schleifstück in seinen Bewebungsmöglichkeiten gegenüber der Schiene praktisch einen Freiheitsgrad mehr, so daß in Fahrtrichtung auftre tende Kraftkomponenten nicht zu einer gerade bei Konstruktionen wie gemäß DE-PS 871 618 und DE-AS 1 226 137 äußerst schwerwiegenden Biegebeanspruchung der Trägeranordnung des Schleifstückes führen, sondern dieses kippen und sich mit glattem Übergang den Unebenheiten anpassen kann. Somit werden die an sich bei den bekannten Stromabnehmern auftretenden Biegekräfte sofort in Ausweichbewegungen umgesetzt. Durch die flächige Anlage unterliegt das Schleifstück wesentlich geringeren Abnutzungskräften, so daß eine ballige Abnutzung vermieden wird. Das Ergebnis ist eine maßgeblich höhere Lebensdauer der Schleifstücke und damit eine Reduzierung der Betriebskosten. Zugleich wird die Stromabnahme bzw. -übertragung maßgeblich in der Qualität gesteigert. So kommt es wesentlich weniger zu der unerwünschten Funkenbildung infolge von Abrissen. Dieses ist insbesondere von Vorteil beim Ein- und Ausfahren in bzw. aus Stromschienenlücken, speziell in Bahnhöfen, bei Weichen od.dgl.. Die Belastung des elektrischen Systems des Zuges ist insgesamt gleichmäßiger.

In Verfolgung des Zieles einer möglichst kleinbauenden Konstruktion ist es in vorteilhafter Weiterbildung der Erfindung möglich, daß sich das Hubelement über ein darin integriertes Federelement an dem Lenker abstützt. Dadurch wird nicht nur der Bedarf an einzelnen Bauteilen reduziert, sondern auch eine absolut symmetrische Abstützung gewährleistet.

Um insbesondere bei Stromschienenlücken und starken Unebenheiten in Stromschienen zu vermeiden, daß das Schleifstück häufig hart aufsetzt (Prallen oder Rattern) und damit einem starken Verschleiß unterliegt, greift nach einer anderen, bevorzugten Ausführungsform der Erfindung an einem Lenker ein zweiseitig in der Parallelogrammebene gegenüber Lenker und Grundkörper angelenktes Dämpfungsglied an. Dieses ist vorzugsweise als Hydropneumatikzylinder vorgesehen, der in einer Richtung, nämlich der Auflaufrichtung des Schleifstückes auf die Stromschiene oder ein sonstiges Hindernis, leicht beweglich, d.h. weitgehend ungedämpft ist, während die Rückbewegung des Schleifstückes gegen die Stromschiene stark gedämpft erfolgt. Durch eine solche Dämpfung werden insbesondere die bei stark ungedämpften Stromabnehmern entstehenden Rattermarken an Auf- und Ablaufstellen von Stromschienen weitestgehend reduziert, die bisher zu erhöhten Beanspruchungen des Schleifstücks und verstärktem Abrieb, also in der Folge zu einem größeren Wartungsaufwand führen.

Um den erfindungsgemäßen Stromabnehmer nicht nur fernbedienen zu können, sondern auch eine manuelle Betätigung bzw. Verriegelung durchführen zu können, kann die Riegelhülse vorzugsweise mit von außen zugänglichen Schiebemitteln versehen sein. Dabei können diese Schiebemittel als auf dem Zylindergehäuse verschiebbarer, über einen Zapfen mit der Riegelhülse in Wirkverbindung stehender Schiebering ausgebildet sein, an denen eine Person 'eicht mit irgendwelchen Hilfswerkzeugen oder direkt von Hand im Servicefall angreifen kann, um den Kolben aus der Riegelposition herauszubewegen.

Durch die selbstzentrierende Verriegelungsanordnung nach der Erfindung mit den konischen Wirkflächen wird es in vorteilhafter Weise möglich, die Klinkenelemente aus einem verschleißfesten, gleitfähigen Kunststoff auszubilden, wodurch man eine erhöhte Wartungsfreiheit der Konstruktion sowie weitere Gewichtsersparnis erzielt.

Um von der Konstruktion her mit möglichst wenigen und weitgehend wartungsfreien Bauteilen auszukommen, kann die Ausgleichsanordnung nach einer weiteren vorteilhaften Ausbildung der Erfindung die Hülse sowie eine diese beaufschlagende Druckfeder umfassen, wobei die Hülse mit der Kolbenstange über einen Querbolzen derart formschlüssig in Verbindung steht, daß in verriegelter Ruhelage des Stromabnehmers die Ausgleichsanordnung spielfrei gehalten ist. Damit ist sichergestellt, daß auf das Hubelement keine Vibrationen einwirken können und bei Verriegelung alle Teile sich in absoluter Ruhelage befinden.

Weitere Vorteile und Ausführungsformen oder -möglichkeiten der Erfindung gehen aus der folgenden Beschreibung der in der schematischen Zeichnung dargestellten Ausführungsbeispiele hervor. Es zeigt

Fig. 1 in Seitenansicht einen Stromabnehmer mit Doppellenker-Anordnung und Stromkabel zu einem fahrzeugseitigen Kontaktpunkt,

Fig. 2 im Längsschnitt einen Zylinder im Ruhezustand und

Fig. 3 im Teilschnitt den Zylinder der Fig. 2 in Arbeitsposition.

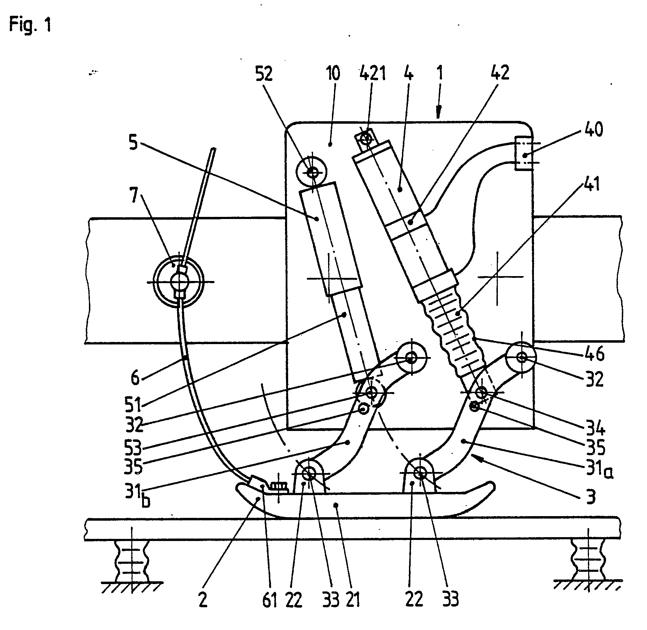

Ein in Fig. 1 gezeigter Stromabnehmer 1 ist mit Hilfe eines Grundkörpers 10 an dem Fahrgestell eines strombetriebenen Fahrzeuges, dessen Antriebsenergie von einer Stromschiene abzunehmen ist, befestigt. Dieser Grundkörper trägt über eine Schwingenanordnung 3 ein Schleifstück 2, das die nicht näher bezeichnete Stromschiene von oben bestreicht. Mit Hilfe eines Hubelements 4 ist die Schwingenanordnung betätigbar, so daß das Schleifstück 2 sich entweder in einer abgehobenen Ruhestellung oder in einer angelegten Arbeitsstellung gegenüber der Stromschiene befindet. In der gezeigten angelegten Arbeitsstellung gelangt elektrische Energie vom Schleifstück 2 über ein Stromkabel 6 zu einer Anschlußstelle bzw. einem Kontaktpunkt 7 am Fahrzeug, von wo aus die zum Betrieb des Zuges erforderlichen Aggregate mit Strom gespeist werden. Insoweit sind Grundaufbau und Funktion von Stromabnehmern für dritte Schiene Stand der Technik und in zahlreichen Druckschriften im Prinzip beschrieben (z.B. DE-PS 1 061 262, DE-AS 1 226 137, DE-PS 1 513 621, DE-PS 1 962 060).

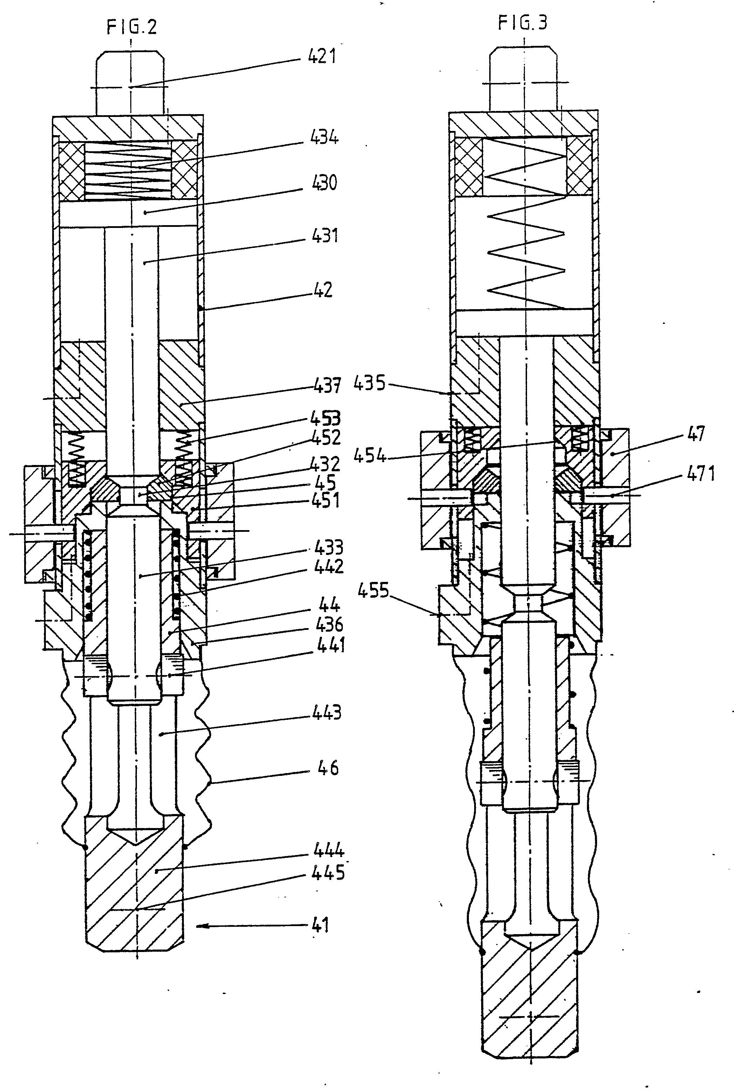

Die Schwingenanordnung 3 umfaßt ein Paar parallelogrammartig angeordneter Lenker 31a, 31b, die über Lagerstellen 32 am Grundkörper 10 und über Lagerstellen 33 in Lageraugen 22 am Schleifstückkörper 21 angelenkt sind. An einem der beiden Lenker 31a greift in einer Lagerstelle 34 das Hubelement 4 gelenkig an, das gegenüber dem Grundkörper 10 in einem Lager 421 schwenkbar gelagert ist. Das Hubelement 4 umfaßt im wesentlichen in seinem unteren, zum Schwingenlager 34 hin gerichteten Teil ein federndes, von einem Balg 46 umgebenes Ausgleichselement 41, auch als Ausgleichsanordnung oder -gestänge zu bezeichnen, sowie in seinem oberen Teil einen Zylinder 42. Das Hubelement 4 ist näher in Fig. 3 und 4 dargestellt und wird weiter unten diesbezüglich erläutert. Zur Beaufschlagung mit für das An- und Ablegen erforderlichen Druckluftimpulsen sind Druckluft-Zufuhrleitungen 40 für den Zylinder 42 vorgesehen, die mit ihrem anderen Ende am Grundkörper 10 befestigt sind und von dorther in geeigneter Weise mit Druckluft versorgt werden.

An dem zweiten der beiden Lenker 31b greift ein in einem Grundkörper-Lager 52 schwenkbar aufgehängtes Dämpfungsglied 5, das im wesentlichen einen Hydropneumatikzylinder 51 umfaßt, - schwenkbar im Lagerpunkt 53 an. Aufbau und Wirkungsweise dieses Dämpfungsgliedes 5 sind so, daß bei Stoßbelastung des Schleifstückkörpers 21 nach oben der Widerstand des Dämpfungsgliedes gering ist, so daß ein schnelles Ausweichen erfolgen kann, wohingegen dem Abwärtsbewegen/Wiederanlegen des Schleifstückkörpers an die Stromschiene ein größerer Widerstand entgegengesetzt wird, so daß dieses Wideranlegen weich erfolgt.

Das in Fig. 2 und 3 im Detail gezeigte Hubelement 4 der Fig. 1 umfaßt im Inneren des Zylinders 42 einen von oben her mittels einer Kolbenfeder 434 und an seiner Unterseite mittels Druckluft beaufschlagbaren Kolben 430. Zur Zufuhr der Druckluft über die obere der beiden Druckluft-Leitungen 40 ist ein Druckluft-Anschluß 435 vorgesehen. Der Kolben 430 trägt eine in geeigneter Weise an ihm befestigte Kolbenstange 431, die zwecks noch näher zu beschreibender Verriegelung wenigstens eine Einschnürung 432 und, an diese anschließend, ein in das Ausgleichselement 41 reichendes unteres Stangenteil 433 hat. Das Ausgleichselement 41 setzt sich zusammen aus einer Hülse 44, die mittels eines Querbolzens 441 formschlüssig mit dem unteren Stangenteil 433 verbunden ist, und einer Druckfeder 442, die im oberen Teil der Hülse 44 außen auf dieser gelagert ist. Die Hülse sitzt im Gleitsitz in einem fest mit dem Zylinder 42 verbundenen, einen unteren Abschluß desselben bildenden büchsenförmigen Gehäuseeinsatz 436 und ist mit einem Langloch 443 versehen, in dem der Querbolzen 441 gleiten kann. Am unteren Ende trägt die Hülse 44 ein Kopfstück 444, in dem sich eine Lagerstelle 445 zur schwenkbaren Lagerung an dem zugeordneten Lenker 31a in der Lagerstelle 34 desselben befindet (Fig.1). Eine mit der Einschnürung 432 zusammenwirkende Verriegelungsanordnung 45 umfaßt eine im Gleitsitz gegenüber der Innenwand des Zylinders 42 bewegbare Riegelhülse 451, die in der in Fig. 2 gezeigten Position auf einem Kreisumfang angeordnete Klinkenstücke 452 in die Einschnürung 432 drückt und so den Kolben 430 über die Kolbenstange 431 in seiner Ruheposition verriegelt. Zur Erzielung dieser Verriegelung sind Riegelfedern 453, bei denen es sich um Druckfedern handelt, vorgesehen, die sich an einem zylinderfesten Einsatz 437, der im übrigen die Druckluftzufuhr 435 trägt, abstützen und über konische Flächen 454 die Klinken 452 in die Einschnürung 432 drücken. Um die Verriegelung zum Zwecke des Anlegens des Schleifstückes 2 bzw. Schleifstückkörpers 21 lösen zu können, ist in dem Gehäuseeinsatz 436 ein Druckluftanschluß 455 vorgesehen, über den eine Impuls-Druckluftbeaufschlagung gegen die untere Fläche der Riegelhülse 451 erfolgt, so daß die Riegelfedern 453 zusammengepreßt werden und sich der Kolben 430 unter Wirkung der Kolbenfeder 434 mit seiner Kolbenstange 431 nach unten bewegen kann, wobei die obere konische Fläche der Einschnürung 432 die Klinkenstücke 452 nach außen drückt. Diese Abwärtsbewegung der Kolbenstange 431 folgt die Hülse 44 des Ausgleichselements 41 unter Wirkung der Druckfeder 442, bis die Klinkenstücke 452 die in Fig. 3 gezeigte gespreizte Position einnehmen, während die Riegelfedern 453, wie dort zu sehen, zusammengedrückt gehalten werden. Die Klinkenstücke 452 liegen jetzt am Außenumfang der Kolbenstange 431 an. In dieser Anlageoder Arbeitsposition des Schleifstückes 2 kann bei Ausweichen desselben infolge irgendwelcher Unebenheiten bzw. beim Auf- oder Ablauf von der Stromschiene eine entsprechende Bewegung, die über den Lenker 31 an das Hubelement 4 übertragen wird, von diesem über die Hülse 44 und die Druckfeder 442 abgefedert aufgenommen werden.

Um das Schleifstück abzulegen, d.h. in Ruheposition zu bringen, wird der Kolben 430 über den Druckluftanschluß 435 Druck beaufschlagt, wodurch die Kolbenfeder 434 zusammengedrückt wird. Gleichzeitig ist die bei 455 zugeführte Druckluft für die Verriegelungsanordnung 45 abgeschaltet. Der von unten beaufschlagte Kolben 430 und das Stangenteil 433 nehmen über den Querbolzen 441 die Hülse 44 unter Zusammendrücken der Druckfeder 442 mit, wobei die Klinkenstücke 452 dann, wenn sie vom Bereich der Einschnürung 432 erreicht werden, sich in diese - unter Einwirkung der Riegelfedern 453 auf die Riegelhülse 451 - hineinbewegen können, und zwar durch Gleiten entlang der unteren konischen Fläche 454 in der Riegelhülse 451, bis wieder die verriegelte Ausgangs-oder Ruheposition (abgelegtes Schleifstück) gemäß Fig. 2 erzielt ist.

Zum Zwecke der Handentriegelung anstelle der Druckluftbetätigung befindet sich außen auf dem Zylindergehäuse 42 verschiebbar ein Schiebering 47, der eine nicht näher bezeichnete Längsnut im Zylindergehäuse mittels mindestens eines Zapfens 471 durchgreift. Letzterer verbindet den Ring 47 mit der Riegelhülse 451, so daß diese von außen her bei Verschieben des Ringes bewegt werden kann.

Das Ausgleichselement 41 ist nach außen mittels des Balges 46 abgeschirmt, um die Wartungsfreiheit des Langloch-Querbolzen-Bereiches sicherzustellen.

Die beschriebene Federung des Hubelements 4 wird, wie schon dargelegt, durch das Dämpfungsglied 5 unterstützt.

Um zu vermeiden, daß bei plötzlichem Auftreffen des Schleifstückkörpers 21 auf ein unvorhergesehenes Hindernis der gesamte Stromabnehmer 1 in Mitleidenschaft gezogen wird, sind die Lenker 31a, 31b, wie Fig.1 zeigt, Sollbruchstellen 35, die hier die Form von Bohrungen haben, aber auch sonstige Ausnehmungen oder Verjüngungen sein können, versehen. Bei zu starker Verformungskraft brechen die Lenker 31 an diesen Stellen ab, ohne daß Deformationen am Stromabnehmer erfolgen. Da dann das Schleifstück 2 mit seinem Schleifstückkörper 21 nur noch an dem Stromkabel 6 hängt, aber aufgrund weiterer an dem Fahrzeug angeordneter Stromabnehmer voll unter Strom steht, zumal der schleifstückseitige Kabelschuh sehr fest mit dem Schleifstück verbunden sein muß, um dessen Bewegungen folgen zu können, ist die fahrzeugseitige Stromkabelverbindung mit Hilfe des dort vorgesehenen, hier nicht näher dargestellten Kabelschuhs ebenfalls als Sollbruchstelle für das Kabel ausgebildet, so daß bei Abreißen des Schleifstückkörpers 21 infolge der hohen Kraft der Kabelschuh mit Hilfe des Schlitzes aus seinem Spanngehäuse herausgerissen werden kann.

## Ansprüche

1. Stromabnehmer für dritte Schiene mit über eine Schwingenanordnung kraftbetätigt an die dritte Schiene anlegbaren Schleifstücken, wobei die Schwingenanordnung als Isolator gegenüber dem Fahrstrom und einem Stromabnehmer-Grundkörper ausgebildet und in ihrer angelegten Arbeitsstellung gegen Federkraft schwingend sowie in mindestens einer ihrer Endstellungen verriegelbar ist, mit einem kraftbetätigten Hubelement, das sich über mindestens ein Federelement gelenkig an der Schwinge abstützt und einen Zylinder mit einem Zylindergehäuse sowie einem kraftbeaufschlagbaren Kolben umfaßt, der in wenigstens einer Position verriegelbar ist und eine Ausgleichsanordnung zur Längenanpassung des Hubelements trägt, die eine von einer Kolbenstange getragene und an ihr geführte Hülse umfaßt, die gegenüber dem Zylindergehäuse durch eine Druckfeder abgestützt ist, wobei die Kolbenstange mit der Hülse verschiebbar in Wirkverbindung steht und gegenüber dem Zylindergehäuse in mindestens einer Position verriegelbar ist, **dadurch gekennzeichnet,** daß zur Verriegelung eine federbeaufschlagte Riegelhülse (451) mit konisch auf an der Kolbenstange (430) angreifende Klinkenelemente (452) einwirkenden Steuerflächen (454) vorgesehen ist, wobei die Verriegelungsposition selbsthaltend und durch Druckfluid mittels Impuls lösbar ist.

2. Stromabnehmer nach Anspruch 1, **dadurch gekennzeichnet,** daß das Hubelement (4) an seinen beiden Enden mit Lagerpunken (421, 445) zur beidseitig schwenkbaren Lagerung am Stromabnehmer-Grundkörper (10) sowie an einem Lenker (31) der Schwingenanordnung (3) ausgebildet ist.

3. Stromabnehmer nach Anspruch 2, **dadurch gekennzeichnet,** daß die Schwingenanordnung (3) in an sich bekannter Weise als gelenkig am Schleifstück (2) angreifendes, in der Fahrebene parallelogrammartig angeordnetes Lenkerpaar (31) ausgebildet ist, wobei sich an mindestens einem der Lenker (31a) dieses Lenkerpaares ein Hubelement (4) gelenkig abstützt und gegenüber dem Stromabnehmer-Grundkörper (10) in der Parallelogrammebene schwenkbar gelagert ist.

4. Stromabnehmer nach Anspruch 3, **dadurch gekennzeichnet,** daß sich das Hubelement (4) über die darin integrierte Ausgleichsanordnung (41) an dem Lenker (31a) abstützt.

5. Stromabnehmer nach Anspruch 3 oder 4, **dadurch gekennzeichnet,** daß an einem Lenker (31b) ein zweiseitig in der Parallelogrammebene gegenüber Lenker und Grundkörper (10) angelenktes Dämpfungsglied (5) angreift.

6. Stromabnehmer nach Anspruch 5, **dadurch gekennzeichnet,** daß das Dämpfungsglied ein Hydropneumatikzylinder (51) ist.

7. Stromabnehmer nach einem der Ansprüche 1 bis 6, **dadurch gekennzeichnet,** daß die Riegelhülse (451) mit von außen zugänglichen Schiebemitteln (47) versehen ist.

8. Stromabnehmer nach Anspruch 7, **dadurch gekennzeichnet,** daß die Schiebemittel als auf dem Zylindergehäuse (42) verschiebbarer, über einen Zapfen (471) mit der Riegelhülse (451) in Wirkverbindung stehender Schiebering (47) ausgebildet ist.

9. Stromabnehmer nach einem der Ansprüche 1 bis 8, **dadurch gekennzeichnet,** daß die Klinkenelemente (452) aus einem verschleißfesten, gleitfähigen Kunststoff ausgebildet sind.

10. Stromabnehmer nach einem der Ansprüche 1 bis 9, **da durch gekennzeichnet,** daß die Ausgleichsanordnung (41) die Hülse (44) sowie eine diese beaufschlagende Druckfeder (442) umfaßt und daß die Hülse mit der Kolbenstange (433) über einen Querbolzen (441) derart formschlüssig in Verbindung steht, daß in verriegelter Ruhelage des Stromabnehmers (1) die Ausgleichsanordnung spielfrei gehalten ist.

Fig. 1

FIG.2

FIG.3